# EUROPEAN PATENT APPLICATION

(11) **EP 4 636 338 A1**
(43) Date of publication of application: **22.10.2025**
(21) Application number: 24181066.2
(22) Date of filing: 10.06.2024
(51) Int. Cl.: F25C 1/045, F25C 5/08, F25C 1/18

(54) **ICE MAKER**

(30) Priority: 15.04.2024 CN 202420763472 U
(71) Applicant: Dongguan Wangniudun Yinghui Electronics Factory, Dongguan City, Guangdong Province 523000 (CN)
(72) Inventor: ZHANG, Wusheng, Dongguan City, Guangdong Province 523000 (CN)
(74) Representative: Meyer-Dulheuer MD Legal Patentanwälte PartG mbB

(57) **Abstract**

An ice maker contains: a body and a water tank, and the body includes an evaporator, an ice making mold, a movable slider, a fixed holder, and a drive mechanism. The evaporator and the ice making mold have at least one hemispheric cavity which are connected to produce a spherical cavity. A gap is defined between the movable slider and the fixed holder, and the ice making mold has at least one feeding mouth. A water feeding mechanism and a water spraying mechanism are defined between the body and the water tank. The water feeding mechanism includes a water pump and a supply tube, and a slit is defined between at least one nozzle and at least one feeding mouth. The water spraying mechanism includes a water pump, a water tube, and a spraying element.

## Description

### TECHNICAL FIELD

The present disclosure relates to an ice maker which is capable of producing ice cubes with a high transparency.

### BACKGROUND

Due to large surface area, visual impact, and slow melting speed of ice cubes, the ice cubes are often used in drinks such as Visa cards, cocktails, and soft drinks. However, since its large size, the ice cubes are prone to bubbles, impurities and cracks during making said ice cubes, thus decreasing the transparency of the ice cubes. The ice making machine uses a small amount of water injection method. It does not fill the mold with water at one time, but waters are feed quantitatively and multiple times to condense the ice cubes layer by layer, thus reducing bubbles, impurities and cracks. However, this method cannot completely eliminate the bubbles, impurities and cracks, and the transparency of the ice cubes is still low.

In order to ensure quantitative water feeding, an additional measuring box is required to provide above the mold. The waters from the water tank are pumped to the measuring box, and then the solenoid valve is used to quantitatively feed water into the mold, thus having complex structure and high cost.

The present invention has arisen to mitigate and/or obviate the afore-described disadvantages.

### SUMMARY

A primary aspect of the present invention is to provide an ice maker which is capable of eliminating a measurement box of a conventional ice maker to simplify structure and reduce fabrication cost of the ice maker, and to enhance transparency of the ice cubes.

To obtain above-mentioned aspect, an ice maker provided by the present invention contains: a body and a water tank connected on a bottom of the body.

The body includes an evaporator, an ice making mold, a movable slider, a fixed holder, and a drive mechanism. The fixed holder is fixed in a front end of the body, a mold clamping slider is slidably received in a rear end of the body, the drive mechanism is connected with the mold clamping slider, the evaporator is mounted on a side of the fixed holder facing the movable slider, the ice making mold is disposed on a side of the movable slider facing the evaporator. The evaporator and the ice making mold have at least one hemispheric cavity so that the at least one hemispheric cavity of the evaporator is connected with the at least one hemispheric cavity of the ice making mold to produce a spherical cavity.

The ice making mold extends out of the movable slider, and a gap is defined between the movable slider and the fixed holder, the ice making mold has at least one feeding mouth defined on a top thereof, communicating with the spherical cavity, and located in the gap.

A water feeding mechanism and a water spraying mechanism are defined between the body and the water tank, the water feeding mechanism includes a water pump and a supply tube, the supply tube has at least one nozzle defined on a top thereof and located above the at least one feeding mouth, and a slit is defined between the at least one nozzle and the at least one feeding mouth, a bottom of the supply tube is connected with the water tank, and the water pump is mounted on the supply tube.

The water spraying mechanism includes a water pump, a water tube, and a spraying element configured to produce a water curtain, and the spraying element is located on and horizontally passes through the gap, an end of the water tube is connected with the spray tube, and the other end of the water tube is connected with the water tank, the water pump is disposed on a water spraying pipe.

Thereby, the water pump of the present invention pumps the waters into the spherical cavity from the water tank via the supply tube. After the waters are full of the spherical cavity, the waters flows back to the water tank, thus supplying the waters repeatedly, and the waters flow into the spherical cavity successively to discharge the bubbles and impurities, thus reducing the cracks and enhancing the transparency of the ice cubes. Preferably, the water measurement box of the conventional ice maker is eliminated to simplify the ice maker and to decrease a fabrication cost. In a demolding process, the evaporator is heated to remove the ice cubes from the evaporator, and the waters of the water tank are pumped by the water pump to the spraying element via the water tube so as to produce the water curtain, and the water curtain is poured to a top of the ice making mold, thus melting the ice cubes to enhance a success rate of the demolding process. The waters flow back to the water tank from the spherical cavity via the ice making mold and the gap and then flow to the body via the two outlets without passing through a dropping orifice, hence the waters do not contact the ice cubes to enhance a stable supply of the ice cubes.

Other objects and features will be in part apparent and in part pointed out hereinafter.

### BRIEF DESCRIPTION OF THE DRAWINGS

FIG. 1 is a perspective view showing the assembly of an ice maker according to a preferred embodiment of the present invention.
FIG. 2 is a perspective view showing the exploded components of the ice maker according to the preferred embodiment of the present invention.
FIG. 3 is a cross sectional view showing the assembly of the ice maker according to the preferred embodiment of the present invention.
FIG. 4 is an amplified cross-sectional view of a portion A of FIG. 3.
FIG. 5 is a schematic view showing the operation of the ice maker according to the preferred embodiment of the present invention.
FIG. 6 is a schematic view showing the operation of the ice maker according to the preferred embodiment of the present invention.

### DETAILED DESCRIPTION

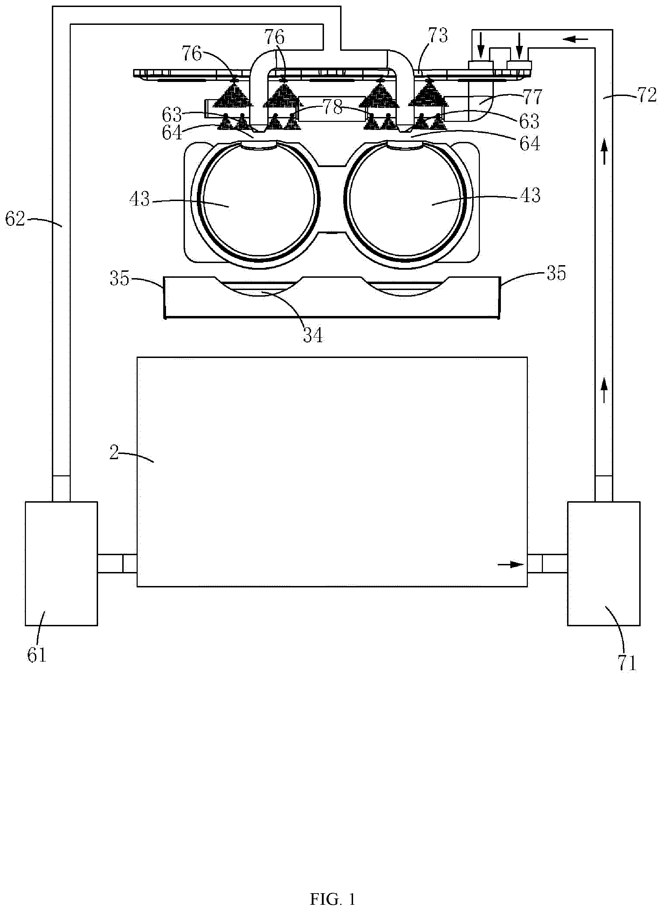

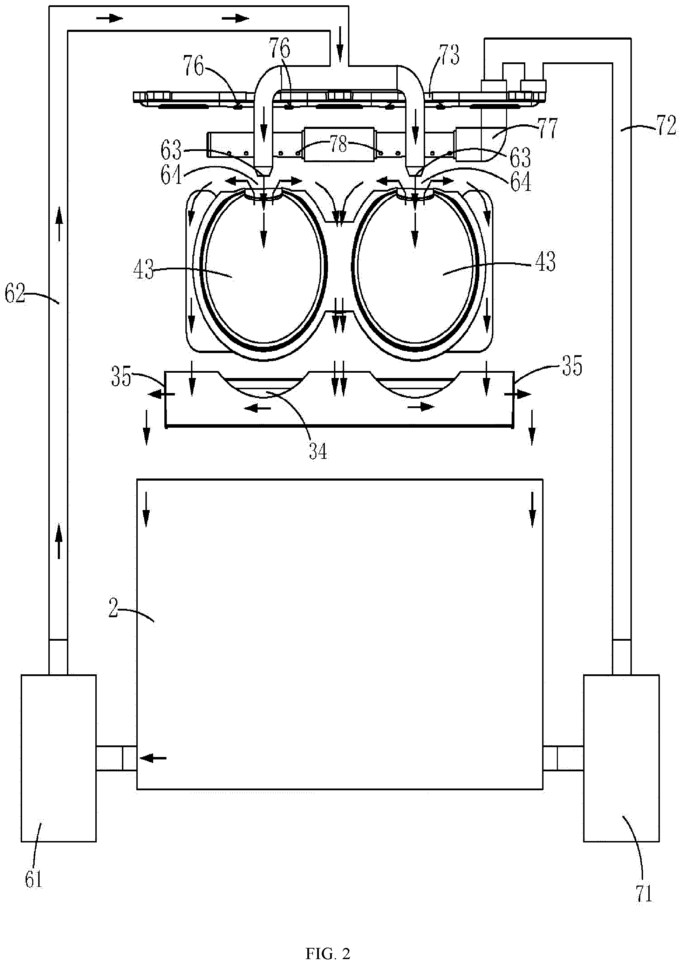

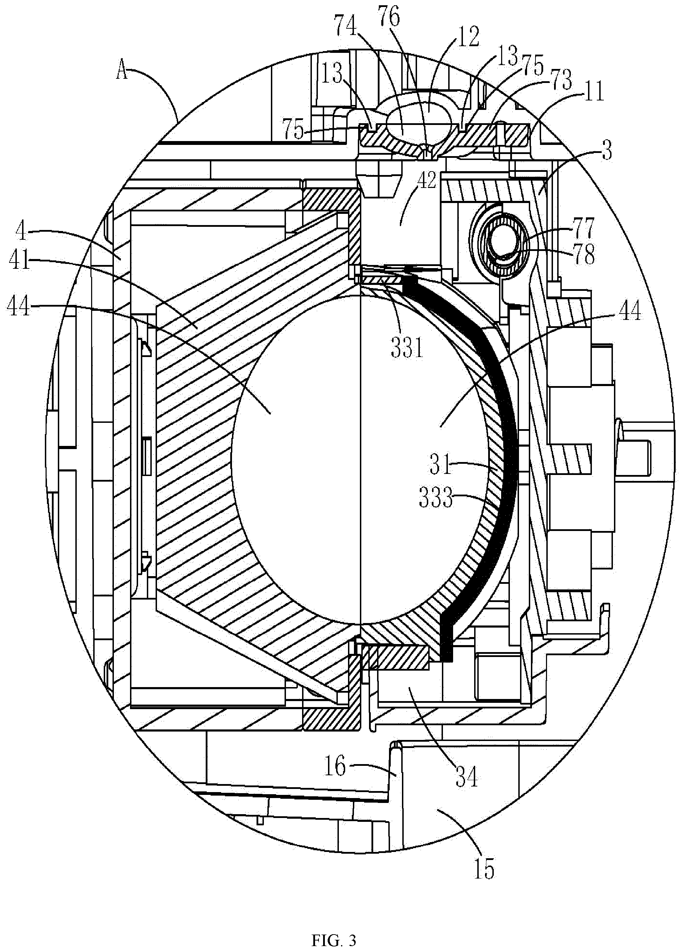

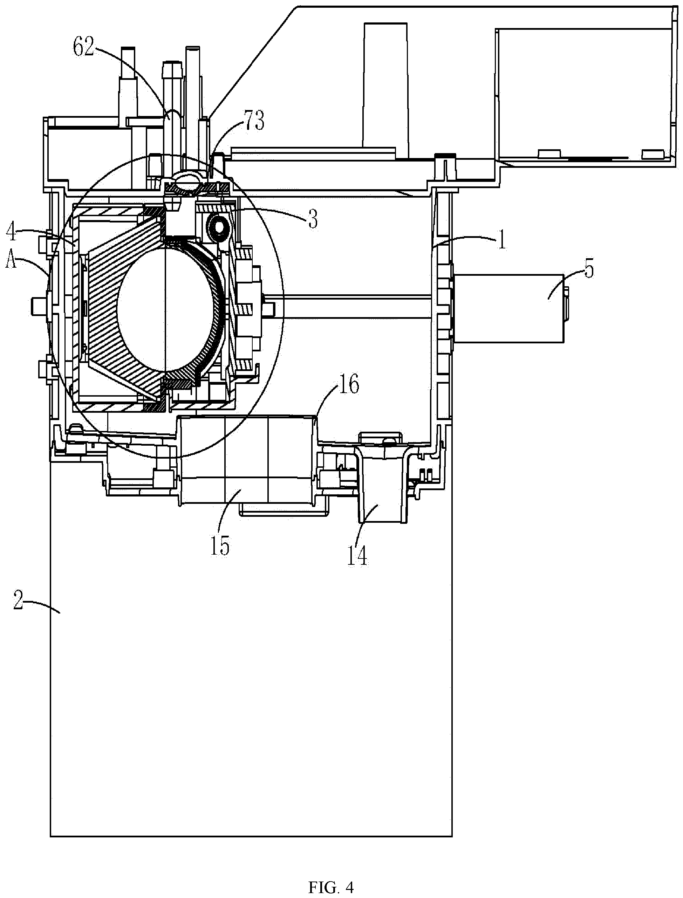

With reference to FIGS. 1-6, an ice maker according to a preferred embodiment of the present invention comprises: a body 1 and a water tank 2 connected on a bottom of the body 1, and the body 1 includes an evaporator 41, an ice making mold 31, a movable slider 3, a fixed holder 4, and a drive mechanism 5. The fixed holder 4 is fixed in a front end of the body 1, a mold clamping slider is slidably received in a rear end of the body 1, the drive mechanism 5 is connected with the mold clamping slider, the evaporator 41 is mounted on a side of the fixed holder 4 facing the movable slider 3, the ice making mold 31 is disposed on a side of the movable slider 3 facing the evaporator 41, wherein the evaporator 41 and the ice making mold 31 have at least one hemispheric cavity 44 so that the at least one hemispheric cavity 44 of the evaporator 41 is connected with the at least one hemispheric cavity 44 of the ice making mold 31 to produce a spherical cavity 43. The ice making mold 31 extends out of the movable slider 3, and a gap 42 is defined between the movable slider 3 and the fixed holder 4, wherein the ice making mold 31 has at least one feeding mouth 32 defined on a top thereof, communicating with the spherical cavity 43, and located in the gap 42. A water feeding mechanism and a water spraying mechanism are defined between the body 1 and the water tank 2. The water feeding mechanism includes a water pump 61 and a supply tube 62, wherein the supply tube 62 has at least one nozzle 63 defined on a top thereof and located above the at least one feeding mouth 32, and a slit 64 is defined between the at least one nozzle 63 and the at least one feeding mouth 32, a bottom of the supply tube 62 is connected with the water tank 2, and the water pump 61 is mounted on the supply tube 62. The water spraying mechanism includes a water pump 71, a water tube 77, and a spraying element 73 configured to produce a water curtain, wherein the spraying element 73 is located on and horizontally passes through the gap 42, an end of the water tube 77 is connected with the spray tube 72, and the other end of the water tube 77 is connected with the water tank 2. The water pump 71 is disposed on a water spraying pipe.

The conventional ice maker pumps waters into a water measurement box so that the water measurement box feeds the waters into the spherical cavity 43, then the waters are frozen to produce ice cubes. However, such ice cubes has lots of bubbles and cracks, and low transparency. The water pump 61 of the present invention pumps the waters into the spherical cavity 43 from the water tank 2 via the supply tube 62. After the waters are full of the spherical cavity 43, the waters flows back to the water tank 2, thus supplying the waters repeatedly, and the waters flow into the spherical cavity 43 successively to discharge the bubbles and impurities, thus reducing the cracks and enhancing the transparency of the ice cubes. Preferably, the water measurement box of the conventional ice maker is eliminated to simplify the ice maker and to decrease a fabrication cost. In a demolding process, the evaporator 41 is heated to remove the ice cubes from the evaporator 41, and the waters of the water tank 2 are pumped by the water pump 71 to the spraying element 73 via the water tube 77 so as to produce the water curtain, and the water curtain is poured to a top of the ice making mold 31, thus melting the ice cubes to enhance a success rate of the demolding process.

The ice making mold 31 includes an insulation shell 33 covered thereon, and the insulation shell 33 has a front part 331 and a rear part 333, wherein the front part 331 has at least one separation ring 332, and the rear part 333 has at least one hemispherical trough 334, the ice making mold 31 clamps between the front part 331 and the rear part 333. The waters flow downward along an outer wall of the ice making mold 31 from the spherical cavity 43. When making the ice cubes, the evaporator 41 conducts a low temperature to the ice making mold 31 so that the outer wall of the ice making mold 31 is frozen to stop a demolding of the ice cubes. The insulation shell 33 is configured to separate the ice making mold 31 and the waters, thus reducing freezing of the water to facilitate and accelerating the demolding.

The ice making mold 31 is covered by an insulating glue layer coated on the outer wall thereof, thus decreasing excessive frozen waters.

The body 1 includes an accommodation trench 11 defined on a top thereof and accommodating the spraying element 73, wherein the accommodation trench 11 has an upper portion 12 horizontally formed thereon, the spraying element 73 has a recess 74 horizontally formed on a top thereof and communicating with the upper portion 12, and the supply tube 62 is communicated with a channel which horizontally passes through the gap 42, the upper portion 12 has two seal ribs 13 extending from a front end and a rear end thereof, the recess 74 has two indents 75 defined on a front end and a rear end thereof, wherein the two seal ribs 13 are received in the two indents 75. After removing the spraying element 73, the upper portion 12 and the recess 74 are exposed outsides to obtain an easy cleaning, simplify a structure, and reduce a fabrication cost. The two seal ribs 13 and the two indents 75 facilitate a sealing effect of the channel to avoid a water leakage.

The spraying element 73 has multiple watering orifices 76 separately defined on a bottom thereof and communicating with the channel, such that the waters flow out of the multiple watering orifices 76 to produce multiple watering columns to form the water curtain, thus spraying the water curtain on the ice making mold 31 to demold the ice cubes easily.

The spraying element 73 has an elongated opening defined on the bottom thereof, communicating with the channel, and horizontally passing through the gap 42, such that the waters flow out of the elongated opening to produce the water curtain, thus increasing a covering area of the water curtain, decreasing a spray blind spot, and enhancing a demolding speed.

The demold water spraying mechanism further includes a peripheral element which includes the water pipe 77 horizontally fixed in the movable slider 3 and located on a tilted top of the ice making mold 31, wherein an end of the water tube 77 is closed, and the other end of the water tube 77 is communicated with the spray tube 72, the water tube 77 has multiple peripheral orifices 78 separately defined on the side thereof facing the ice making mold 31. The waters are pumped to the water tube 77 from the water tank 2 via the sprat tube by the water pump 71, and the water tube 77 sprays the waters to the ice making mold 31 so that the ice cubes remove from the ice making mold 31 to enhance the demolding success rate and efficiency.

The movable slider 3 further includes a guide groove 34 defined on a bottom thereof and located below the gap 42, wherein the guide groove 34 has two outlets 35 formed on two sides thereof. The waters flow back to the water tank 2 from the spherical cavity 43 via the ice making mold 31 and the gap 42 and then flow to the body 1 via the two outlets 35 without passing through a dropping orifice 15, hence the waters do not contact the ice cubes to enhance a stable supply of the ice cubes.

The body 1 further includes a collection orifice 14 and the dropping orifice 15 which are formed on the bottom thereof, wherein the collection orifice 14 is located behind the dropping orifice 15, and a stop fringe 16 is extended upward around the dropping orifice 15, two conduits 17 are defined among the stop fringe 16 and the body 1 and located below the two outlets 35. After demolding, the ice cubes drop into a basket of the water tank 2 from the dropping orifice 15, then the waters flow to the two conduits 17 from the spherical cavity 43 via the guide groove 34, and the two conduits 17 guides the waters back to the collection orifice 14 so as to collect the waters in the water tank 2, wherein the collection orifice 14 is defined away from the basket below the dropping orifice 15 to avoid contacting the ice cubes. The stop fringe 16 is configured to avoid the waters flowing into the dropping orifice 15, thus enhancing the supply stability of the ice cubes.

The body 1 includes a bottom wall tilting from a front end to a rear end of the body 1, a vertical height of the collection orifice 14 is lower than a vertical height of the dropping orifice 15, and the bottom wall of the body 1 has a slope, thus preventing an accumulation of the waters.

In operation, the drive mechanism 5 drives the movable slider 3 to move toward the fixed holder 4 so that the ice making mold 31 and the evaporator 41 are closed, and two hemispheric cavities 44 are connected to produce the spherical cavity 43.

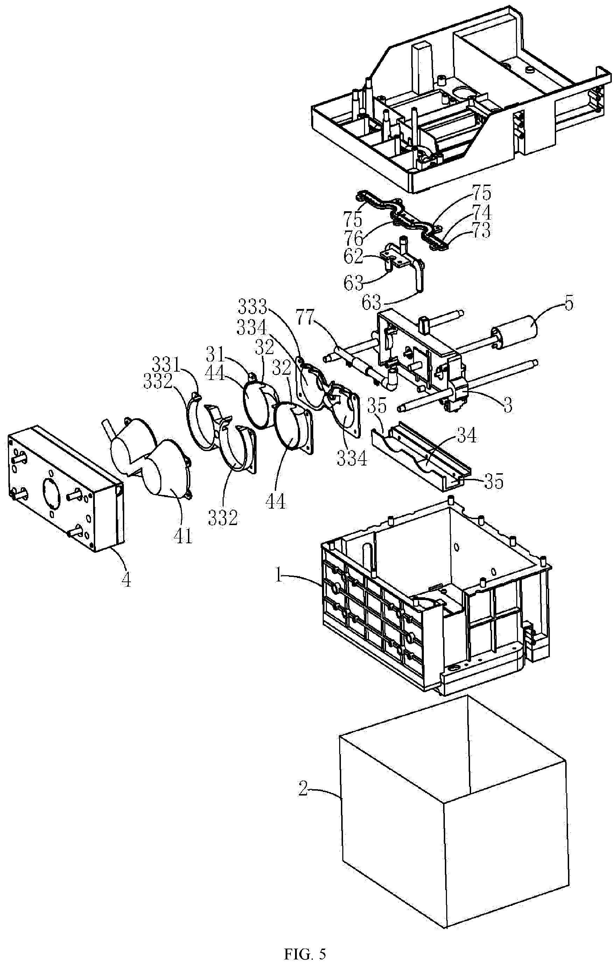

Referring to FIG. 5, the waters of the water tank 2 are pumped into the spherical cavity 43 via the supply tube 62, after the waters are full of the spherical cavity 43, the waters flow back to the water tank 2 via the slit 64, thus supplying the waters repeatedly. After turning on a compressor, a temperature of the evaporator 41 is reduced to produce the ice cubes.

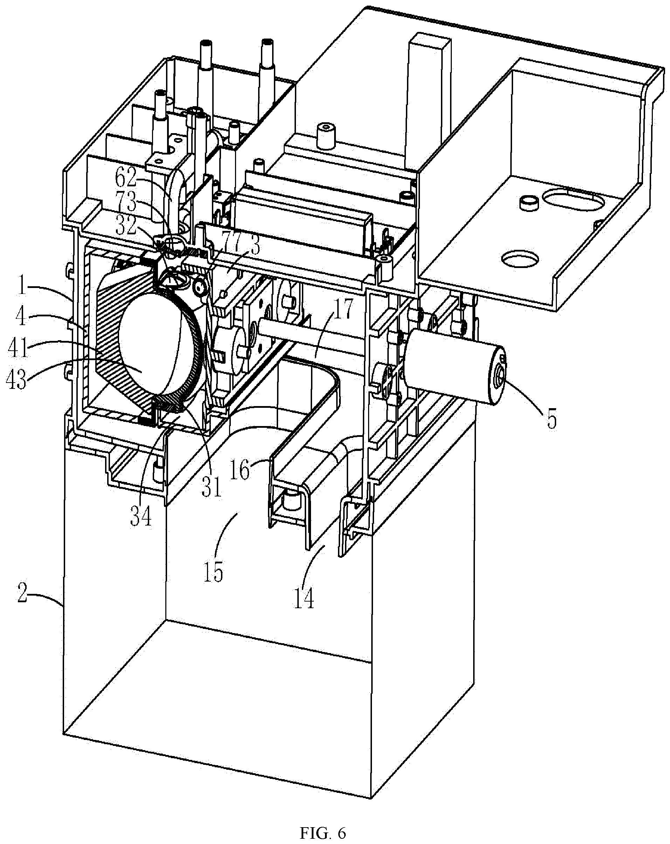

As shown in FIG. 6, the water pump 71 pumps the waters of the water tank 2 to the spraying element 73 and the water tube 77 via the spray tube 72, wherein the spraying element 73 is configured to produce the water curtain from the waters, then the water curtain is poured to the top of the ice making mold 31 to melt the ice cubes. The water tube 77 is configured to spray the waters on a peripheral side of the ice making mold 31 so that the ice cubes remove from the ice making mold 31, and the evaporators 41 is heated to remove the ice cubes from the evaporator 41, thus finishing demolding.

Thereafter, the drive mechanism 5 drives the moveable slider 3 to move away from the fixed holder 4, and the ice cubes drop into the basket of the water tank 2 via the dropping orifice 15.

When introducing elements of the present invention or the preferred embodiments thereof, the articles "a", "an", "the" and "said" are intended to mean that there are one or more of the elements. The terms "comprising", "including" and "having" are intended to be inclusive and mean that there may be additional elements other than the listed elements.

In view of the above, it will be seen that the several objects of the invention are achieved and other advantageous results attained.

As various changes could be made in the above constructions, products, and methods without departing from the scope of the invention, it is intended that all matter contained in the above description and shown in the accompanying drawings shall be interpreted as illustrative and not in a limiting sense.

## Claims

1. An ice maker, comprising: a body (1) and a water tank (2) connected on a bottom of the body (1), and the body (1) includes an evaporator (41), an ice making mold (31), a movable slider (3), a fixed holder (4), and a drive mechanism (5), wherein the fixed holder (4) is fixed in a front end of the body (1), a mold clamping slider is slidably received in a rear end of the body (1), the drive mechanism (5) is connected with the mold clamping slider, the evaporator (41) is mounted on a side of the fixed holder (4) facing the movable slider (3), the ice making mold (31) is disposed on a side of the movable slider (3) facing the evaporator (41), wherein the evaporator (41) and the ice making mold (31) have at least one hemispheric cavity (44) so that the at least one hemispheric cavity (44) of the evaporator (41) is connected with the at least one hemispheric cavity (44) of the ice making mold (31) to produce a spherical cavity (43);
wherein the ice making mold (31) extends out of the movable slider (3), and a gap (42) is defined between the movable slider (3) and the fixed holder (4), wherein the ice making mold (31) has at least one feeding mouth (32) defined on a top thereof, communicating with the spherical cavity (43), and located in the gap (42);
wherein a water feeding mechanism and a water spraying mechanism are defined between the body (1) and the water tank (2), the water feeding mechanism includes a water pump (61) and a supply tube (62), wherein the supply tube (62) has at least one nozzle (63) defined on a top thereof and located above the at least one feeding mouth (32), and a slit (64) is defined between the at least one nozzle (63) and the at least one feeding mouth (32), a bottom of the supply tube (62) is connected with the water tank (2), and the water pump (61) is mounted on the supply tube (62);
wherein the water spraying mechanism includes a water pump (71), a water tube (77), and a spraying element (73) configured to produce a water curtain, wherein the spraying element (73) is located on and horizontally passes through the gap (42), an end of the water tube (77) is connected with the spray tube (72), and the other end of the water tube (77) is connected with the water tank (2), the water pump (71) is disposed on a water spraying pipe.

2. The ice maker as claimed in claim 1, wherein the ice making mold (31) includes an insulation shell (33) covered thereon, and the insulation shell (33) has a front part (331) and a rear part (333), wherein the front part (331) has at least one separation ring (332), and the rear part (333) has at least one hemispherical trough (334), the ice making mold (31) clamps between the front part (331) and the rear part (333).

3. The ice maker as claimed in claim 1, wherein the ice making mold (31) is covered by an insulating glue layer coated on the outer wall thereof.

4. The ice maker as claimed in claim 1, wherein the body (1) includes an accommodation trench (11) defined on a top thereof and accommodating the spraying element (73), wherein the accommodation trench (11) has an upper portion (12) horizontally formed thereon, the spraying element (73) has a recess (74) horizontally formed on a top thereof and communicating with the upper portion (12), and the supply tube (62) is communicated with a channel which horizontally passes through the gap (42);
wherein the upper portion (12) has two seal ribs (13) extending from a front end and a rear end thereof, the recess (74) has two indents (75) defined on a front end and a rear end thereof, and the two seal ribs (13) are received in the two indents (75).

5. The ice maker as claimed in claim 4, wherein the spraying element (73) has multiple watering orifices (76) separately defined on a bottom thereof and communicating with the channel.

6. The ice maker as claimed in claim 4, wherein the spraying element (73) has an elongated opening defined on the bottom thereof, communicating with the channel, and horizontally passing through the gap (42).

7. The ice maker as claimed in claim 1, wherein the demold water spraying mechanism further includes a peripheral element which includes the water pipe (77) horizontally fixed in the movable slider (3) and located on a tilted top of the ice making mold (31), wherein an end of the water tube (77) is closed, and the other end of the water tube (77) is communicated with the spray tube (72), the water tube (77) has multiple peripheral orifices (78) separately defined on the side thereof facing the ice making mold (31).

8. The ice maker as claimed in claim 1, wherein the movable slider (3) further includes a guide groove (34) defined on a bottom thereof and located below the gap (42), wherein the guide groove (34) has two outlets (35) formed on two sides thereof.

9. The ice maker as claimed in claim 8, wherein the body (1) further includes a collection orifice (14) and the dropping orifice (15) which are formed on the bottom thereof, wherein the collection orifice (14) is located behind the dropping orifice (15), and a stop fringe (16) is extended upward around the dropping orifice (15), two conduits (17) are defined among the stop fringe (16) and the body 1 and located below the two outlets (35).

10. The ice maker as claimed in claim 9, wherein the body includes a bottom wall tilting from a front end to a rear end of the body (1), and a vertical height of the collection orifice (14) is lower than a vertical height of the dropping orifice (15).
